# EUROPÄISCHE PATENTSCHRIFT

(11) **EP 2 559 665 B1**
(45) Veröffentlichungstag und Bekanntmachung des Hinweises auf die Patenterteilung: **31.01.2018**
(21) Anmeldenummer: 12179477.0
(22) Anmeldetag: 07.08.2012
(51) Int. Cl.: C02F 1/32

(54) **Wasserbereiter**
Water preparation device
Chauffe-eau

(30) Priorität: 16.08.2011 DE 102011081053
(43) Veröffentlichungstag der Anmeldung: 20.02.2013
(73) Patentinhaber: BSH Hausgeräte GmbH, 81739 München (DE)
(72) Erfinder: Heilmaier, Marion, 83317 Teisendorf (DE)

(56) Entgegenhaltungen:
- DE-A1- 2 633 449
- DE-A1- 2 735 550
- DE-T2-602004 002 307
- US-A- 5 628 895
- US-B1- 6 773 608

## Beschreibung

Die Erfindung betrifft einen Wasserbereiter zur Bereitstellung von Trinkwasser nach dem Oberbegriff des Patentanspruchs 1, mit einem für UV-Strahlung durchlässigen Durchflusskörper, mit zumindest einer UV-Strahlungsquelle zum Bestrahlen des durch den Durchflusskörper strömenden Wassers mit UV-Strahlung, und mit einem Gehäuse zur Aufnahme des Bestrahlungskörpers und der Strahlungsquelle nahe eines Wasserauslasses.

Wasserbereiter, insbesondere zur Verwendung im häuslichen Bereich, zur Bereitstellung von Trinkwasser in Form von Heißwasser, Kaltwasser und/oder raumtemperiertem Wasser haben häufig eine UV-Strahlungsquelle zum Aussenden von UV-Strahlung zur Bestrahlung des Wassers und somit zur Abtötung von sich im Wasser befindenden Mikroorganismen. Prinzipiell sind zwei verschiedene Anordnungen der UV-Strahlungsquelle bekannt.

Zum einen kann die UV-Strahlungsquelle zur Desinfektion in einem Bestrahlungstank angeordnet sein. Derartige Wasserbereiter sind jedoch aufgrund des Bestrahlungstankes verhältnismäßig groß. Zudem ist eine lange Bestrahlungsdauer notwendig, um die Mikroorganismen im Bestrahlungstank zu inaktivieren. Neben der langen Bestrahlungszeit und einer mit dieser einhergehenden hohen Strahlungsdosis kann ferner eine Rückverkeimung vom zapfseitigen Wasserauslass bis zum Bestrahlungstank auftreten.

Zum anderen kann die UV-Strahlenquelle im Durchfluss nahe des Wasserauslasses positioniert sein. Derartige Wasserbereiter sind wesentlich kompakter als die vorgenannten Tankausführungen und zeichnen sich zudem durch eine verkürzte Bestrahlungszeit, eine reduzierte Strahlungsdosis und durch eine verringerte Rückverkeimung von dem Wasserauslass aus. Ein derartiger Wasserbereiter ist beispielsweise in der DE 60 2004 002 307 T2 gezeigt. Kritisch bei den Wasserbereitern nach dem Durchlaufprinzip ist jedoch die Anordnung der UV-Strahlungsquelle. Aufgrund der Anordnung der UV-Strahlungsquelle nahe des Wasserauslasses ist jedoch grundsätzlich die Gefahr eines Strahlungsaustritts gegeben. Zur Vermeidung eines Strahlungsaustritts wird in der DE 60 2004 002 307 T2 daher vorgeschlagen, die UV-Strahlungsquelle mit dem zu bestrahlenden Strömungskanalabschnitt in einem gemeinsamen Gehäuse anzuordnen. Problematisch bei dieser Anordnung ist jedoch die Zugänglichkeit der UV-Strahlungsquelle zum Beispiel im Rahmen einer Wartung oder beim Austausch der Strahlungsquelle bei einem Defekt.

Weitere Wasserbereiter zur Desinfektion von Wasser mittels UV-Bestrahlungssystem sind beispielsweise aus der DE 27 35 550, der US 6 773 608 und der US5 628 895 bekannt.

Aufgabe der Erfindung ist es, einen Wasserbereiter zur Bereitstellung von Trinkwasser zu schaffen, der die vorgenannten Nachteile beseitigt, eine Rückverkeimung von einem Wasserauslass zumindest stark unterdrückt und eine einfache und schnelle Zugänglichkeit zu einem UV-Bestrahlungssystems ohne einen Eingriff in ein Wassersystem ermöglicht.
Diese Aufgabe wird gelöst durch einen Wasserbereiter mit den Merkmalen des Patentanspruchs 1. Vorteilhafte Aus- und Weiterbildungen, welche einzeln oder in Kombination miteinander einsetzbar sind, sind Gegenstand der jeweils abhängigen Ansprüche. Ein erfindungsgemäßer Wasserbereiter zur Bereitstellung von Trinkwasser hat einen für UV-Strahlung durchlässigen Durchflusskörper, zumindest eine UV-Strahlungsquelle zum Bestrahlen des durch den Durchflusskörper strömenden Wassers mit UV-Strahlung, und ein Gehäuse zur Aufnahme des Durchflusskörpers und der Strahlungsquelle nahe eines Wasserauslasses. Erfindungsgemäß definiert das Gehäuse eine Bestrahlungskammer mit einem Durchflusskörperbereich und mit einem Strahlungsquellenbereich und hat ein Deckelelement zum Öffnen der Bestrahlungskammer, wobei der Strahlungsquellenbereich zwischen dem Durchflusskörperbereich und dem Deckelement angeordnet ist.
Dadurch, dass die Strahlungsquelle das durch den Durchflusskörper strömende Wasser nahe des Wasserauslasses bestrahlt, wird einer Rückverkeimung von dem Wasserauslass in Richtung des Wassertanks wirkungsvoll entgegengewirkt. Dadurch, dass die Strahlungsquelle und der Bestrahlungskörper zumindest abschnittsweise in einem Bestrahlungsraum angeordnet sind, wird ein Austritt von UV-Strahlung wirkungsvoll verhindert. Dadurch, dass die Strahlungsquelle in einem Bereich der Bestrahlungskammer angeordnet ist, der zwischen einem Bestrahlungskörperbereich und einem Deckelelement vorgesehen ist, wird bei Öffnung des Deckels zuerst die Strahlungsquelle frei zugänglich. Der Bestrahlungskörper wird bei einem Wechsel der Strahlungsquelle nicht versehentlich berührt und kann somit nicht verschmutzt werden. Eine UV-Durchlässigkeit des Durchflusskörpers und somit eine Desinfektionswirkung werden nicht beeinträchtigt. Erst wenn die Strahlungsquelle entfernt ist, ist eine Zugänglichkeit zum Durchflusskörper gegeben. Eine Beschädigung des Durchflusskörpers bei einem Wechsel der Strahlungsquelle ist somit ausgeschlossen. Zudem wird durch die freie Zugänglichkeit eine Fehlmontage und somit eine Beschädigung der UV-Strahlungsquelle selbst verhindert. Ein Endverbraucher kann somit eine defekte Strahlungsquelle einfach und schnell ersetzen. Der Bestrahlungskörper ermöglicht zudem eine lokal gezielte Einleitung der UV-Strahlung.

Bevorzugterweise ist die Strahlungsquelle oberhalb des Durchflusskörpers angeordnet, so dass im unwahrscheinlichen Fall eines Wasseraustritts aus dem Durchflusskörper ein elektrischer Kurzschluss im Bereich der Strahlungsquelle verhindert wird.

Zum Schutz eines Endverbrauchers vor UV-Strahlung ist es vorteilhaft, wenn die Strahlungsquelle bei geöffnetem Bestrahlungsraums ausgeschaltet ist und nicht versehentlich angeschaltet werden kann. Dies kann dadurch erreicht werden, dass der Deckel mit einem Schalter zum selbsttätigen Ausschalten der UV-Strahlungsquelle in Wirkverbindung steht.

Zur Vermeidung eines versehentlichen Strahlungsaustritt im Bereich des Wasserauslasses ist es vorteilhaft, wenn der Durchflusskörper von einem Durchbruch des Gehäuses beabstandet ist, durch den der Wasserauslass geführt ist.

Um eine optimale Entkeimung des Wassers zu erreichen, ist die Länge und Form des Durchflusskörpers in Abhängigkeit eines maximal geforderten Durchflusses gewählt. Um dabei eine relativ große Bestrahlungsfläche zu erhalten, kann der Durchflusskörper gegenüber angrenzenden Strömungsabschnitten querschnittsverbreitert sein. Beispielsweise kann der Bestrahlungskörper ein rechteckiges oder ovales Profil aufweisen.

Der Schutz vor einer Rückverkeimung lässt sich weiter verbessern, wenn nach jedem Zapfvorgang eine Selbstentleerung des Durchflusskörpers erfolgt. Dies lässt sich beispielsweise durch eine Neigung des Durchflusskörpers zur Horizontalen erreichen. Der Wasserauslass ist von einer UV-undurchlässigen Abschirmung ummantelt, die sich durch den Durchbruch erstreckt. Die Abschirmung wirkt quasi als Dichtung des Wasserauslasses und verhindert somit einen verlässlichen Strahlungsaustritt durch den Durchbruch hindurch zwischen der Gehäusewandung und dem Wasserauslass. Zusätzlich wirkt die Abschirmung als ein Kontaktschutz des Wasserauslaufes, so dass der Endverbraucher den Wasserauslass nicht unmittelbar berühren kann.

Zum weiteren Schutz vor einer Kontaktverkeimung des Wasserauslasses ist zumindest zwischen einem Austrittsrand des Wasserauslasses und der Abschirmung ein mit der Außenumgebung kommunizierender Ringraum gebildet. Der Ringraum wirkt quasi als Luftbarriere und wird durch eine radiale Beabstandung der Abschirmung von dem Austrittsrand ausgebildet. Der Schutz vor einer Kontaktverkeimung wird weiter dadurch verbessert, dass die Abschirmung in Zapfrichtung über den Austrittsrand hervorsteht, so dass eine versehentliche stirnseitige Berührung des Austrittsrands verhindert ist.
Sonstige vorteilhafte Ausführungsbeispiele der Erfindung sind Gegenstand weiterer Unteransprüche.
Die Erfindung eignet sich insbesondere zur Schaffung eines kompakten Wasserbereiters für den häuslichen Gebrauch zur Bereitstellung von Trinkwasser, bei dem eine UV-Strahlungsquelle einfach und schnell vom Endverbraucher gewechselt werden kann, ein Strahlenaustritt verhindert wird, eine Rückverkeimung von einem Wasserauslass zu einem Wassertank und somit eine Verkeimung eines Auslaufrohres verhindert wird, und eine Kontaktverkeimung des Wasserauslasses verhindert wird.
Im Folgenden wird ein bevorzugtes Ausführungsbeispiel der Erfindung anhand stark vereinfachter schematischer Darstellungen näher erläutert. Es zeigen:
Figur 1 eine schematische Darstellung eines erfindungsgemäßen Wasserbereiters, und
Figur 2 eine Detaildarstellung aus Figur 1.

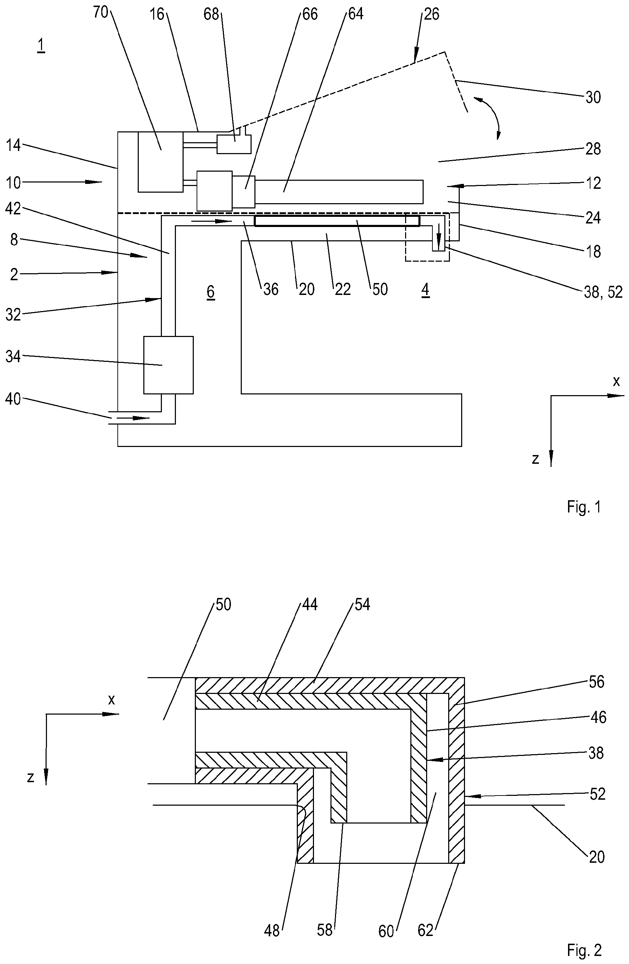

Gemäß der Darstellung in Figur 1 hat ein erfindungsgemäßer Wasserbereiter 1 zur Bereitstellung von Trinkwasser ein Gehäuse 2, der einen außenliegenden Zapfbereich 4 zur Positionierung eines nicht dargestellten Gefäßes zur Aufnahme des Trinkwassers und einen Innenraum 6 begrenzt. In dem Innenraum 6 ist im Wesentlichen ein Wassersystem 8 und ein UV-Bestrahlungssystem 10 angeordnet. Ein Wassertank ist aus Gründen der Übersichtlichkeit nicht gezeigt. Der Wassertank kann innerhalb oder außerhalb des Gehäuses positioniert sein.

Der Innenraum 6 hat eine Bestrahlungskammer 12, die von Gehäusewandungen 14, 16, 18, 20 aus einem für UV-Strahlung undurchlässigen Material begrenzt ist. Die Bestrahlungskammer 12 hat einen wassersystemseitigen Durchflusskörperbereich 22 und einen bestrahlungssystemseitigen Strahlungsquellenbereich 24. In Vertikalrichtung betrachtet ist der Strahlungsquellenbereich 24 oberhalb des Duchflusskörperbereichs 22 angeordnet. Zur Verbesserung einer Bestrahlungswirkung und zur Vermeidung eines Strahlungsaustritts ist der Bestrahlungsraum 12 mit einer nicht gezeigten Beschichtung mit einem hohen Reflektionsgrad für UV-Strahlung versehen. Beispiele sind polierte Metallbeschichtungen.

Die Bestrahlungskammer 12 ist über ein gehäuseseitiges Deckelelement 26 zugänglich. Das Deckelement 26 ist oberhalb des Strahlungsquellenbereichs 24 an einer oberen Gehäusewandung 16 angelenkt und ermöglicht somit insbesondere eine Zugänglichkeit zum Strahlungsquellenbereich 24. Zur Vergrößerung einer Serviceöffnung 28 hat es zumindest einen vertikalen Elementenabschnitt 30, der sich in Schließstellung abschnittsweise mit der seitlichen Gehäusewandung 18 in Überdeckung befindet.

Das Wassersystem 8 hat ein Steigrohr 32, eine Pumpe 34, ein Auslaufrohr 36 und einen Wasserauslass 38. Das Steigrohr 32 ist UV-undurchlässig. Es erstreckt sich zwischen dem Wassertank und dem Auslaufrohr 36 und hat einen horizontalen Rohrabschnitt 40 und einen vertikalen Rohrabschnitt 42. Die Pumpe 34 ist in dem vertikalen Rohrabschnitt 42 integriert und dient zur Förderung einer geforderten Wassermenge aus dem Wassertank in Richtung des Wasserauslasses 38. Armaturen zur Ansteuerung der Pumpe 34 und/oder zur Auf- und Zusteuerung des Auslaufrohres 36 sind aus Gründen der Übersichtlichkeit nicht dargestellt.

Das Auslaufrohr 36 ist UV-undurchlässig und in dem Durchflusskörperbereich 22 der Bestrahlungskammer 12 angeordnet. Es erstreckt sich stromabwärts der Pumpe 34 von dem vertikalen Rohrabschnitt 42 des Steigrohrs 32 in Richtung des Wasserauslasses 38.

Der Wasserauslass 38 ist UV-undurchlässig und in dem Durchflusskörperbereich angeordnet. Er hat eine L-förmig Gestalt mit einem in Figur 2 bezifferten Zulaufabschnitt 44 und mit einem abgewinkelten Zapfabschnitt 46. Der Zulaufabschnitt 44 verläuft in Längsrichtung des Auslaufrohrs 36. Der Zapfabschnitt 46 definiert eine etwa orthogonal zur Horizontalen x verlaufende Zapfrichtung z und ist durch einen Durchbruch 48 in einer unteren Gehäusewandung 20 geführt.

Zur Entkeimung des aus dem Wassertank entnommenen Wassers ist zwischen dem Auslaufrohr 36 und dem Wasserauslass 38 in dem Durchflusskörperbereich 22 ein Durchflusskörper 50 angeordnet. Der Durchflusskörper 50 besteht aus einem für UV-Strahlung durchlässigen Material und hat einen gegenüber einem stromaufwärtigen Abschnitt des Auslaufrohrs 36 und dem stromabwärtigen Zulaufabschnitt 44 des Wasserauslasses 38 einen verbreiterten Querschnitt. Insbesondere hat der Durchflusskörper 50 einen ovalen oder einen rechteckigen Querschnitt. Zur Selbstleerung des Durchflusskörpers 50 nach Beendigung eines Zapfvorganges und somit zur Vermeidung einer Rückverkeimung ist dieser in Richtung des Wasserauslasses 38 zur Horizontalen x leicht geneigt angeordnet (nicht gezeigt).

Wie in der Detaildarstellung nach Figur 2 verdeutlicht, ist zur Vermeidung eines Strahlungsaustritts im Bereich des Durchbruchs 48 der Wasserauslass 38 von einer UV-undurchlässigen Abschirmung 52 des Bestrahlungssystems 10 ummantelt. Die Abschirmung 52 hat eine L-förmige Gestalt mit einem in Richtung des Durchflusskörpers 50 orientierten horizontalen vorderen Abschnitt 54 und mit einem in Zapfrichtung weisenden vertikalen hinteren Abschnitt 56. Die Abschirmung 52 liegt stirnseitig an dem Durchflusskörper 50 an und ist dichtend durch den Durchbruch 48 geführt. Sie umgreift mit ihrem in Strömungsrichtung betrachtet vorderen Abschnitt 54 den Zulaufabschnitt 44 und mit ihrem hinteren Abschnitt 56 den Zapfabschnitt 46 des Wasserauslasses 38.

Zur Vermeidung einer Verkeimung des Wasserauslasses 38 bei Berührung der Abschirmung 52 durch einen Endverbraucher ist der hintere Abschnitt 56 des Abschirmung 52 vom Austrittsrand 58 des Wasserauslasses 38 radial beabstandet. Hierdurch wird zwischen dem hinteren Abschnitt 56 und dem Wasserauslass 38 ein Ringraum 60 gebildet, der zur Außenumgebung geöffnet ist und somit eine Luftbarriere darstellt, wodurch ein Keimübergang von der Abschirmung 52 auf den Wasserauslass 38 verhindert wird. Zur Verhinderung eines stirnseitigen Kontakts des Wasserauslasses 38 durch den Endverbraucher ist der hintere Abschnitt 56 mit seiner Außenkante 62 in Zapfrichtung z gegenüber dem Wasserauslass 38 verlängert bzw. der Austrittrand 58 gegenüber der Außenkante 62 in Zapfrichtung z zurückversetzt ausgebildet.

Wie in Figur 1 gezeigt hat das UV-Bestrahlungssystem 10 zur Bestrahlung des durch den Durchflusskörper 50 strömenden Wassers eine UV-Strahlungsquelle 64. Die Strahlungsquelle 64 ist im Strahlungsquellenbereich 24 der Bestrahlungskammer 12 angeordnet und somit oberhalb des Durchflusskörpers 50 bzw. zwischen dem Durchflusskörper 50 und dem Deckelement 26 positioniert. Das Deckelelement 26 hat vorzugsweise eine derartige Erstreckung, dass in seiner Öffnungsstellung die UV-Strahlungsquelle 64 einschließlich einer sie aufnehmenden Fassung 66 frei zugänglich ist.

Die Strahlungsquelle ist in Längsrichtung des Durchflusskörpers 50 orientiert und weist in etwa die gleiche Länge wie der Durchflusskörpers 50 auf, so dass eine Bestrahlung des Wassers über die gesamte Länge des Durchflusskörpers 50 erfolgt. Zur Optimierung der Bestrahlung bzw. Entkeimung des Wassers ist die Strahlungsquelle 64 in einem geringen Abstand zum Durchflusskörper 50 positioniert.

Um ein versehentliches Ausdringen von UV-Strahlung beim Öffnen der Bestrahlungskammer 12 zu verhindern, weist das UV-Bestrahlungssystem 10 einen im Innenraum 6 angeordneten Schalter 68 auf. Dieser steht mit dem Deckelelement 26 in Wirkverbindung und meldet seine jeweilige Schaltstellung an eine innenseitig positionierte Steuerung 70, die beim Verschwenken des Deckelelements 26 eine Bestromung zur UV-Strahlungsquelle 64 unterbricht, wodurch diese ausgeschaltet wird. Eine Bestromung der UV-Strahlungsquelle 64 ist erst wieder beim Schließen der Bestrahlungskammer 12 bzw. beim Überführen des Deckelelementes 26 zurück in seine Schließstellung möglich.

Offenbart ist ein Wasserbereiter zur Bereitstellung von Trinkwasser, mit einem für UV-Strahlung durchlässigen Durchflusskörper, mit zumindest einer UV-Strahlungsquelle zum Bestrahlen des durch den Durchflusskörper strömenden Wassers mit UV-Strahlung, und mit einem Gehäuse zur Aufnahme des Durchflusskörpers und der Strahlungsquelle nahe eines Wasserauslasses, wobei das Gehäuse eine Bestrahlungskammer mit einem Durchflusskörperbereich und mit einem Strahlungsquellenbereich definiert und ein Deckelelement zum Öffnen der Bestrahlungskammer hat, wobei der Strahlungsquellenbereich zwischen dem Durchflusskörperbereich und dem Deckelement angeordnet ist.

### Bezugszeichenliste

- 1: Wasserbereiter
- 2: Gehäuse
- 4: Zapfbereich
- 6: Innenraum
- 8: Wassersystem
- 10: UV-Bestrahlungssystem
- 12: Bestrahlungskammer
- 14: Gehäusewandung
- 16: obere Gehäusewandung
- 18: seitliche Gehäusewandung
- 20: untere Gehäusewandung
- 22: Durchflusskörperbereich
- 24: Strahlungsquellenbereich
- 26: Deckelelement
- 28: Serviceöffnung
- 30: Elementenabschnitt
- 32: Steigrohr
- 34: Pumpe
- 36: Auslaufrohr
- 38: Wasserauslass
- 40: horizontaler Rohrabschnitt
- 42: vertikaler Rohrabschnitt
- 44: Zulaufabschnitt
- 46: Zapfabschnitt
- 48: Durchbruch
- 50: Durchflusskörper
- 52: Abschirmung
- 54: vorderer Abschnitt
- 56: hinterer Abschnitt
- 58: Austrittsrand
- 60: Ringraum
- 62: Außenkante
- 64: UV-Strahlungsquelle
- 66: Fassung
- 68: Schalter
- 70: Steuerung

- x: Horizontale
- z: Zapfrichtung

## Patentansprüche

1. Wasserbereiter (1) zur Bereitstellung von Trinkwasser, mit einem für UV-Strahlung durchlässigen Durchflusskörper (50), mit zumindest einer UV-Strahlungsquelle (64) zum Bestrahlen des durch den Durchflusskörper (50) strömenden Wassers mit UV-Strahlung, und mit einem Gehäuse (2) zur Aufnahme des Durchflusskörpers (50) und der Strahlungsquelle (64) nahe eines Wasserauslasses (38), welcher durch einen Durchbruch einer Gehäusewandung geführt ist, wobei das Gehäuse (2) eine Bestrahlungskammer (12) mit einem Durchflusskörperbereich (22) und mit einem Strahlungsquellenbereich (24) definiert sowie ein Deckelelement (26) zum Öffnen der Bestrahlungskammer (12) hat, wobei der Strahlungsquellenbereich (24) zwischen dem Durchflusskörperbereich (22) und dem Deckelelement (26) angeordnet ist, **dadurch gekennzeichnet, dass** der Wasserauslass (38) von einer UV-undurchlässigen Abschirmung (52) ummantelt ist, die sich durch den Durchbruch (48) erstreckt, und zwischen einem in Zapfrichtung weisenden Abschnitt (56) der Abschirmung (52) und dem Wasserauslass (38) ein Ringraum (60) gebildet ist, der zur Außenumgebung geöffnet ist, wobei die Abschirmung (52) in Zapfrichtung über den Austrittsrand (58) des Wasserauslasses (38) hervorsteht.

2. Wasserbereiter nach Anspruch 1, wobei die UV-Strahlungsquelle (64) in Zapfrichtung (z) betrachtet oberhalb des Durchflusskörpers (50) angeordnet.

3. Wasserbereiter nach Anspruch 1 oder 2, wobei das Deckelelement (26) mit einem Schalter (68) zum selbsttätigen Ausschalten der Strahlungsquelle (64) beim Öffnen der Bestrahlungskammer (12) in Wirkverbindung steht.

4. Wasserbereiter nach Anspruch 1, 2 oder 3, wobei der Durchflusskörper (50) von dem Durchbruch (48) beabstandet ist.

5. Wasserbereiter nach einem der vorhergehenden Ansprüche, wobei der Durchflusskörper (50) gegenüber angrenzenden Strömungsabschnitten (36, 44) verbreitet ist.

6. Wasserbereiter nach einem der vorhergehenden Ansprüche, wobei der Durchflusskörper (50) zur Horizontalen (x) geneigt ist.

## Claims

1. Water preparation device (1) for the preparation of drinking water, with a flow-through element (50) which is permeable for UV radiation, with at least one UV radiation source (64) for irradiating the water flowing through the flow-through element (50) with UV radiation, and with a housing (2) for receiving the flow-through element (50) and the radiation source (64) close to a water outlet (38), which is guided through a cutout in a housing wall, wherein the housing (2) defines an irradiation chamber (12) with a flow-through element region (22) and with a radiation source region (24) and also has a cap element (26) for opening the irradiation chamber (12), wherein the radiation source region (24) is arranged between the flow-through element region (22) and the cap element (26), **characterised in that** the water outlet (38) is encapsulated by a UV-impermeable shielding (52), which extends through the cutout (48), and between a section (56) of the shielding (52) facing in the tap direction and the water outlet (38) an annual space (60) is formed, which is open to the external surrounding, wherein the shielding (52) protrudes beyond the discharge edge (58) of the water outlet (38) in the tap direction.

2. Water preparation device according to claim 1, wherein the UV radiation source (64), when viewed in the tap direction (z), is arranged above the flow-through element (50).

3. Water preparation device according to claim 1 or 2, wherein the cap element (26) has an active connection with a switch (68) for automatically switching off the radiation source (64) when the radiation chamber (12) is opened.

4. Water preparation device according to claim 1, 2 or 3, wherein the flow-through element (50) is at a distance from the cutout (48).

5. Water preparation device according to one of the preceding claims, wherein the flow-through element (50) is elongated compared to the adjacent flow sections (36, 44).

6. Water preparation device according to one of the preceding claims, wherein the flow-through element (50) is inclined towards the horizontal (x).

## Revendications

1. Préparateur d'eau (1) destiné à la préparation d'eau potable, comprenant un corps d'écoulement (50) perméable au rayonnement UV, comprenant au moins une source de rayonnement UV (64) destinée au rayonnement, avec un rayonnement UV, de l'eau circulant à travers le corps d'écoulement (50), et comprenant un boîtier (2) pour le logement du corps d'écoulement (50) et de la source de rayonnement (64) près d'une sortie d'eau (38), lequel est guidé à travers un passage d'une paroi de boîtier, le boîtier (2) possédant une chambre de rayonnement (12) définie par une zone de corps d'écoulement (22) et par une zone de source de rayonnement (24) ainsi qu'un élément de recouvrement (26) pour l'ouverture de la chambre de rayonnement (12), la zone de source de rayonnement (24) étant disposée entre la zone de corps d'écoulement (22) et l'élément de recouvrement (26), **caractérisé en ce que** la sortie d'eau (38) est enveloppée par un écran (52) imperméable aux UV, lequel s'étend à travers le passage (48), et **en ce qu'**entre une section (56) de l'écran (52), tournée en direction de prélèvement, et la sortie d'eau (38) est formé un espace annulaire (60) qui est ouvert vers l'environnement extérieur, l'écran (52), en direction de prélèvement, faisant saillie au-delà du bord de sortie (58) de la sortie d'eau (38).

2. Préparateur d'eau selon la revendication 1, la source de rayonnement UV (64), en vue en direction de prélèvement (z), étant disposée au-dessus du corps d'écoulement (50).

3. Préparateur d'eau selon la revendication 1 ou 2, l'élément de recouvrement (26) étant en liaison active avec un commutateur (68) pour l'arrêt automatique de la source de rayonnement (64) lors de l'ouverture de la chambre de rayonnement (12).

4. Préparateur d'eau selon la revendication 1, 2 ou 3, le corps d'écoulement (50) étant distancé du passage (48).

5. Préparateur d'eau selon l'une quelconque des revendications précédentes, le corps d'écoulement (50) étant élargi par rapport à des sections d'écoulement adjacentes (36, 44).

6. Préparateur d'eau selon l'une quelconque des revendications précédentes, le corps d'écoulement (50) étant incliné par rapport à l'horizontale (x).
